# EUROPEAN PATENT APPLICATION

(11) **EP 1 189 385 A2**
(43) Date of publication of application: **20.03.2002**
(21) Application number: 01125197.2
(22) Date of filing: 16.10.1997
(51) Int. Cl.: H04L 12/26, H04L 12/28, H04L 12/14

(54) **An apparatus and method for gathering, processing and locally storing information on access to a service made by an apparatus over a communications system**

(62) Divisional of application: 97909432.3
(71) Applicant: Virtual Access Ireland Limited, Dublin 2 (IE)
(72) Inventor: Slaby, John, Virtual Access (UK) Limited, Ascot, SL5 7PW (GB); Loughlin, Thomas, Virtual Access (Ireland) Limited, Dublin 2 (IE); Brankin, Henry, Virtual Access (Ireland) Limited, Old Downs Way, Dublin 2 (IE)
(74) Representative: Collins, John David

(57) **Abstract**

Apparatus for communicating with a remote system over a network to access a service stores information on the usage made of the service by the computer system, processes the information and then transmits the information to a remote management system.

## Description

The present invention generally relates to a method and apparatus for gathering, processing and locally storing information on access to a service made by an apparatus over a communication system.

With the ever-increasing use of networks of computers there is an increasing need to simplify the setting up of a network and to more efficiently monitor the operation of the network.

One method by which computers can be networked over large distances is by using the telecommunications network. The prime example of this is the internet. The interconnections into the internet can either be via conventional analogue lines, via the integrated services digital network (ISDN) or via a permanent connection such as a leased line. An alternative network comprises the frame relay network that allows for high data transfers and requires a permanent connection.

A problem with interfacing to a communications network in order to access a service is that the interface apparatus must be configured for communication. Conventionally this is carried out manually requiring a user to either follow a series of steps, and/or to have some knowledge of networking.

When a service is provided over a network, the service provider will collect and process statistics on events surrounding the usage of the service by each user. This requires the service provider to gather and process a large amount of data and if a user wishes to obtain any of the statistics related to access to the service by the user, the user must request this information from the service provider whereupon the service provider can transmit the information to the user.

US Patent 5,557,748 discloses an apparatus for connecting a computer system to a communication line to access a service whereby the apparatus comprises I/O means for connection to the communication line, processing means for gathering information on the use made of the service by the computer system and for processing the information to generate processed information, and storage means for storing the information and/or the processed information.

It is an object of the present invention to reduce the processing of communication information by the service provider and to reduce the flow of communication control data over the network.

The present invention provides apparatus for interfacing a computer system to a communication line to access a service, the apparatus comprising: first I/O means for connection to said computer system; second I/O means for connection to said communication line; processing means for gathering information on the use made of said service by said computer system, for processing said information to generate processed information, and for controlling said second I/O means to transmit said processed information to a remote management system; and storage means for storing said information and/or said processed information.

The present invention also provides apparatus for communicating with a remote system over a network to access a service, the apparatus comprising: I/O means for connection to the network; processing means for gathering information on the use made of said service by said apparatus, and for processing said information to generate processed information; and storage means for storing said information and/or said processed information; characterized in that said processing means is adapted to control said I/O means to transmit said processed information to a remote management system.

The present invention also provides a method of monitoring communications between a communication apparatus and a remote system over a network to access a service, the method comprising the steps at said communication apparatus, of: gathering information on the use of said service by said communication apparatus; and processing said information to generate processed information; characterized by transmitting said processed information to a remote management system.

In one embodiment the remote management system comprises the service provider and thus by locally processing the information and only transmitting the processed information, not only is the processing requirements of the service provider reduced, but also the amount of information which must be transmitted is reduced. Further, since the processed information is locally stored, it is readily accessible by users of the apparatus.

The information which can be gathered can comprise for example the number of bytes transmitted and received, the number of frames transmitted and/or received, the number of errors, and the number of calls made over a telecommunications line.

In one embodiment the apparatus includes a clock such that the information can be gathered with respect to time and the processing can be carried out periodically to generate summary information which summarises the information on the communications made.

To allow a user local access to the processed information, a user interface is provided which can take any convenient form such as a serial interface, or more conveniently the apparatus can operate a computer program to provide the user interface which can comprise a Graphical User Interface (GUI) such as a web page. In such an arrangement a machine independent program e.g. a Java applet can be run in order to obtain the processed information and arrange it for output to the user in a graphical user interface form such a web page.

Configuration data initially set in the apparatus, or configuration data obtained remotely in accordance with the first aspect of the present invention can determine the processing carried out on the gathered information.

Embodiments of the present invention will now be described with reference to the accompanying drawings in which:
Figure 1 is a schematic drawing of a generalised system in accordance with an embodiment of the present invention;
Figure 2 is a schematic drawing of an arrangement using the frame relay network in accordance with an embodiment of the present invention;
Figure 3 is a schematic drawing of an arrangement using the internet in accordance with an embodiment of the present invention;
Figure 4 is a functional diagram of the apparatus in accordance with an embodiment of the present invention;
Figure 5 is a schematic drawing of the apparatus in accordance with an embodiment of the present invention; and
Figure 6 is a flow diagram illustrating the steps involved in configuring the apparatus in accordance with an embodiment of the present invention.

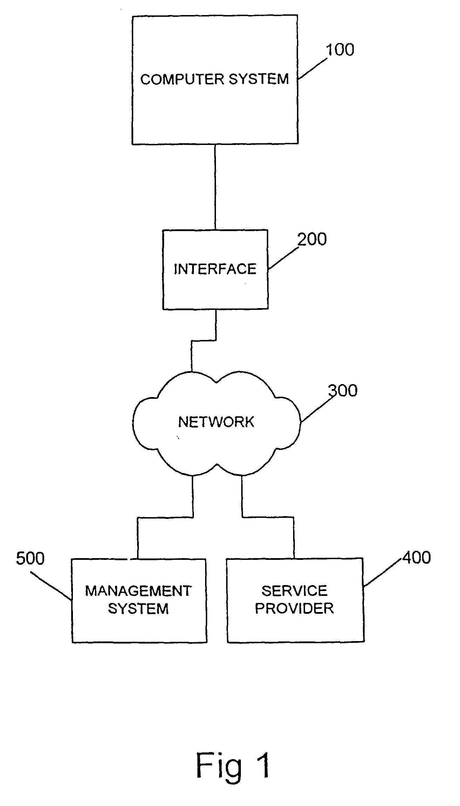

Referring now to Figure 1, this diagram illustrates a generalised system in accordance with an embodiment of the present invention wherein a computer system 100 is connected via an interface 200 to a network 300 in order to access a service 400. A management system 500 is provided connected to the network 300 in order to control access to the service and to provide configuration data for the interface 200 as required.

Although the computer system 100 and interface 200 are shown in Figure 1 separately, the interface 200 can be combined within the computer system 100.

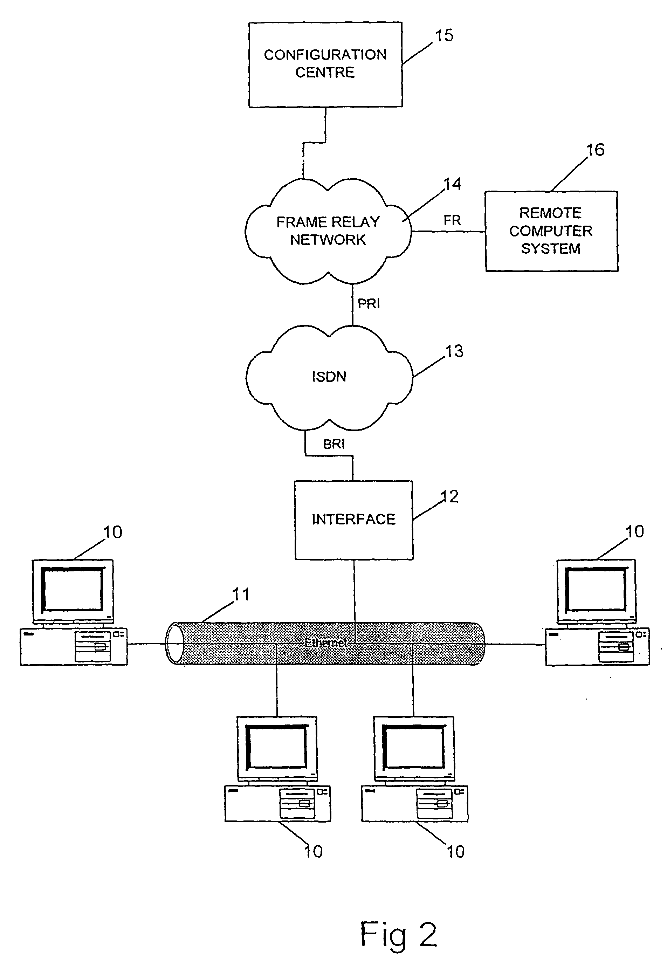

Figure 2 illustrates schematically a more specific embodiment of the present invention which utilises the frame relay network. In this embodiment computers 10 are networked over a local area network (LAN) (11) which is provided with an interface 12 which is connected to an ISDN network 13 via a basic rate ISDN (BRI) line. The ISDN network 13 is connected to the frame relay network via a primary rate ISDN (PRI) line. A remote computer system 16 is connected to the frame relay network 14 using the frame relay (FR) line and a configuration centre 15 is provided also connected to the frame relay network 14 for providing configuration data to the interface 12.

In this embodiment when the interface 12 is initially installed it is configured to dial into the frame relay network 14 via the ISDN network 13 in order to obtain configuration data from the configuration centre 15. The automatic configuration capability in this arrangement removes the necessity for the user of interface 12 to have any knowledge or understanding of the network to which the interface 12 is being connected. The interface 12 is initially configured (factory set) to connect to the configuration centre 15 which will have been provided with information on the service required by the user of the interface 12 and the unique serial number of the interface 12 e.g. at the point of purchase. In this way once the interface 12 has connected to the configuration centre 15, it will transmit its unique serial number whereupon the configuration centre 15 will determine e.g. look up the required configuration data for transmission back to the interface 12. Once the interface 12 has received the new configuration data, this can be used for all future communications in order to connect to the remote computer system 16. The re-configuring of the interface 12 can take place by a re-initialisation of the interface 12, by a reloading of the controlling software and configuration data, or simply by re-reading the configuration data.

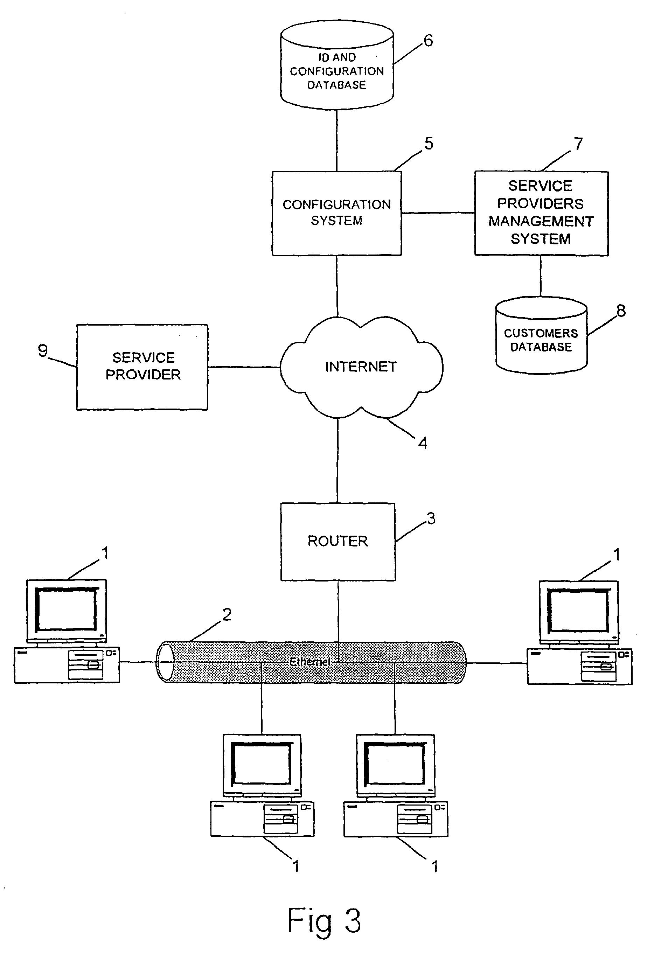

Figure 3 illustrates an alternative embodiment of the present invention wherein computers 1 are connected over a local area network which in this embodiment comprises an ethernet 2. A router 3 is connected to the ethernet 2 to interface the ethernet 2 to the internet 4. A service provider 9 is connected to the router 3 via the internet 4 and a configuration system 5 is also connected to the internet 4 and accessible to the router 3. The configuration system 5 is provided with a database 6 of configuration data for each router serial number. Also Figure 3 illustrates the presence of a service provider's management system 7 and a customer's database 8.

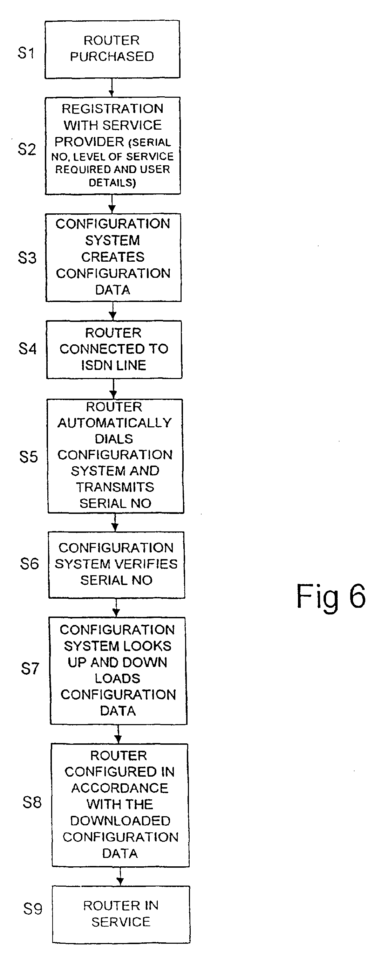

The operation of this system will now be described with reference to the flow diagram of Figure 6. When the router 3 is purchased or soon thereafter and before first connection to access the service, the user registers with the service provider. The registration takes the form of providing the service provider with the serial number of the router, details of the user, and possibly information which identifies the level or type of service required from the provider. Of course, where the provider only provides one level of service i.e. a simple connection, there is no need for this information since it is assumed that if the user is registering connection is required. Such information provided to the service provider is typically held in a customer database 8. The service provider's management system 7 will contain the customer details not just for the purposes of configuration, but also for general management purposes such as billing. The information can then be passed from the service provider's management system 7 into the configuration system 5 which can comprise a separate computer. Alternatively, the functions of the configuration system 5 and the service provider's management system 7 could be combined. With the information on the level and/or type of service required and the serial number of the router, the configuration system can then determine suitable configuration data and install this in the database 6. Of course, as new routers are purchased for use in accessing the service, this process of determining suitable configuration data will be repeated to build up the database 6.

When the router is connected to the internet via for example an ISDN line, the router automatically dials the configuration system and when the connection is made it transmits its unique serial number. The serial number can be encoded for security purposes before being transmitted. When the configuration system receives the serial number, if it is encoded it is decoded and it then goes through a verification process to determine whether it is a valid serial number. If validation is successful the configuration system refers to the database 6 to look up the appropriate configuration data which is then transmitted to the router 3 for storage in the local memory. The transmitted configuration data can be suitably encoded before transmission for security purposes. The connection by the router to the configuration system 5 can then be terminated and the router can then configure itself in accordance with the newly downloaded configuration data. This can be achieved by a re-initialisation of the router, a reloading of the control software and configuration data, or simply by re-reading the configuration data. Once this has been carried out, the router is now configured for future access to the service provided by the service provider 9 i.e. the configuration data has set up the router to dial the correct telephone number to be connected to the service provider, it has loaded a user name and password into the router for transmission to the service provider, and it has set up other connection parameters required for communication between the router and the service provider.

Since in Figure 3 the router 3 comprises a LAN access router, users of the computers 1 looking to access the services of the service provider 9 will be able to do so seamlessly via the router 3. None of the users of the computers or the network manager of the local network need carry out any steps in configuring the LAN access router initially. Also, it is possible for the configuration system 5 to amend or update the configuration data in the router 3 remotely without the need for the local users or local network manager to do anything. One reason for updating the configuration data may be that the connection parameters have changed e.g. the telephone number for the service provider is changed or the data rate. In such circumstances the configuration system 5 may automatically download new configuration data to the router 3 for subsequent use. Alternatively, where a service provider 3 provides different levels of service or possibly even a different service provider is required by the user of the router 3, the user will have contacted the service provider requesting a new or updated level of service. This will of course result in new or updated configuration data in the database 6 which will be automatically downloaded to the router 3. It may also be possible for the user of the router 3 i.e. the local network management to make an online request for updated configuration data.

In this embodiment the connection between the network 4 and the router 3 can be via any form of convenient communication line e.g. a conventional analogue line, an ISDN line, or a permanent communication line. If the communication line is analogue, of course the router will include a modem. Where an ISDN line is available, this will provide a high data rate without the cost of a permanent line. Also, since an ISDN line includes a data (D) channel which can be permanently open for communications of data, the configuration system 5 can use the D channel for downloading configuration data to the router 3.

The configuration system 5 can comprise a workstation running a configuration setup application. The database 6 can be provided within the workstation using any suitable database software such as Microsoft's SQL database software. In order to provide a convenient interface to the user the server can run Microsoft's Internet Infoserver to provide a web interface. The workstation will also operate as a file transfer protocol (FTP) server for the transfer of the configuration data to the router 3.

Although in Figure 3 the configuration system 5 is illustrated as being directly connected to the internet 4, the workstation may be connected to a LAN which has a router connected thereto. Any method of connecting the configuration system 5 to the internet can be used which allows for the router 3 to connect directly into it to obtain configuration data. Thus, although the configuration system 5 is most likely to be operated by the service provider, it need not be and can be operated by a third party.

In the configuration system, in order to form the configuration data there are three levels of configurations to be considered and these are (1) configuration parameters for the hardware of the router, (2) configuration parameters specific to the provider's service and (3) parameters specific to the requirements of the user. In the specific embodiment the Microsoft Internet Information server acts as interface between the operator of the system and the Microsoft SQL database to allow for the parameters to be entered into the database to form the configuration data.

Although Figure 3 illustrates that the router 3 has only one communication line to the internet, it may have a number of communication lines for simultaneous communication to a number of service providers and possibly to a number of configuration systems. Thus, the router 3 will be capable of storing within its memory a configuration file for each communication line which communicates to a service provider. Further, the router may not be limited to a single service provider and thus more than one set of configuration data may be provided (or a set of configuration data with options for different service providers) can be stored within its memory and the router may enable a user to select the service provider to be accessed.

Although Figure 3 illustrates the router as interfacing a local area network to the internet, the router 3 may in fact comprise a simple interface between a single computer system and the internet.

In a conventional network arrangement when a service provider provides a service over the internet to a user, it gathers statistics (i.e. information on events caused by access made by the user) and processes this raw statistical data into more useful summary data. This conventional method of gathering statistical information requires the service provider to continuously retrieve data from the user which stores the raw gathered statistics locally. If a user required summary information it was necessary previously to request this information from the service provider who would then download it to the user. In this embodiment the limitations of the prior art are overcome by providing for local processing of the gathered statistics so that this information can be made available locally and can be periodically uploaded to the service provider. Thus, the amount of information which needs to be passed up to the service provider is reduced, the processing load of the service provider is reduced, and processed statistics are readily available to the user.

In an embodiment of the present invention a manager of the router 3 such as a local area network manager is provided with a user interface which can comprise a web server allowing any one of the computers 1 to enter a URL to access a web page which will display the processed statistics. The processed statistics available to the user can be processed in accordance- with machine independent code which conveniently comprises a Java applet. In addition to this method of interfacing using the local area network 2, the router 3 can be provided with a serial interface to allow local management e.g. the entry of configuration data or to obtain statistics.

In the router a log file is formed in memory which records each communication event and parameters of each event. These parameters can be accessed locally via the user interface and are processed to form summary information which is also available locally via the user interface. The processed statistics will periodically be transmitted to the service provider. The statistics can comprise the number of bytes transmitted and received, the number of frames transmitted and received, the number of errors, and the number of calls made. The configuration file which is remotely downloaded and includes parameters specific to the service provider, will determine how often the raw statistical data is captured, what raw statistical data should be captured, and how many samples are to be kept. The number of variables and number of samples to be kept are limited by the memory capacity of the router 3 and this will be taken into consideration by the configuration system during the formation of the configuration data since it will have all the information necessary to form the appropriate configuration data.

The statistical processing is carried out by capturing events and synchronising these events with the operation of a real time clock. This generates a table of raw statistical data. When the table of raw statistical data is full, the data is processed in accordance with the configuration data to form summary data in a summary table. It is this summary data in the summary table which can be viewed by the user interface and the type of user interface can be determined by the configuration data.

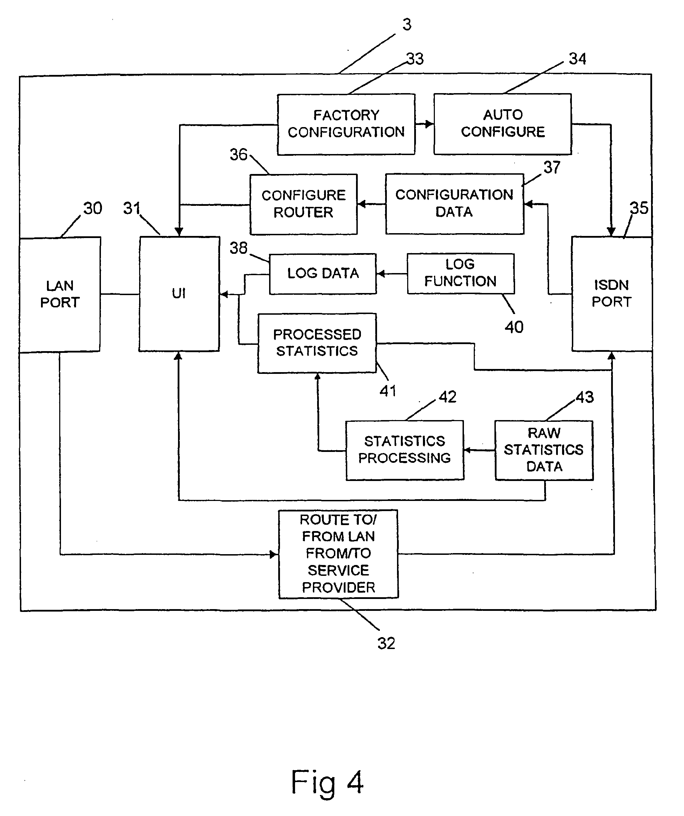

Referring now to Figure 4, there is illustrated a functional diagram of the router 3. A LAN port 30 interfaces the router 3 to the LAN. A router 32 is provided for communications which are to be routed to/from the LAN from/to the service provider and an ISDN port 35 is provided for interface to the telecommunications network. A factory configuration 33 is initially set within the router which initiates an auto-configuration process 34 which causes the router to dial the remote configuration system and transmit its unique serial number. Configuration data 37 is thus received a process 36 for configuring the router configures it for future communications. For all future communications a log function 40 logs communication events to form log data 38. This forms part of the raw statistical data 43 which is processed by a statistics processing procedure 42 to generate processed statistics 41. A user interface 31 provides access for a user to the raw statistical data, the log data, and the processed statistics. The type of user interface is initially dependent upon the factory configuration and subsequently to the downloaded configuration data. The processed statistics 41 is not only available to the user interface 31, it is also available via the ISDN port 35 to the service provider.

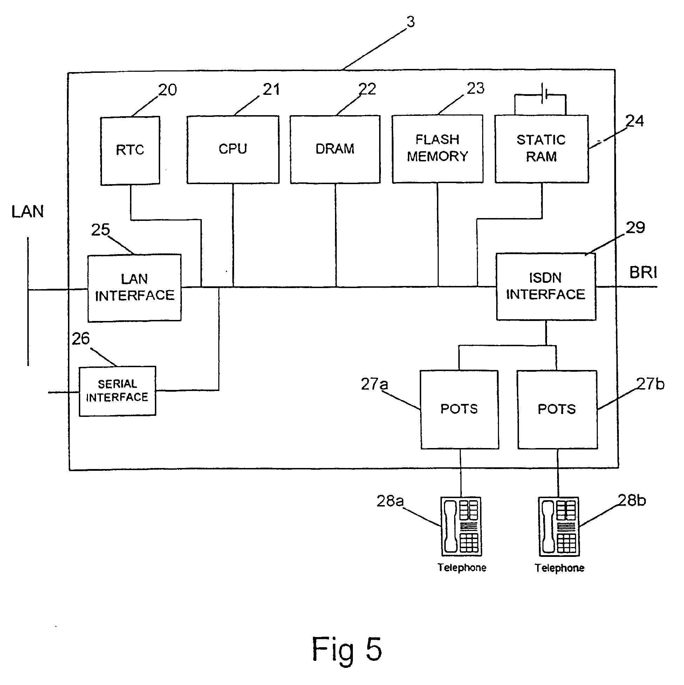

Figure 5 illustrates schematically the structure of the router 3 in accordance with an embodiment of the present invention. A LAN interface is provided for connection to a LAN. The interface provides a network manager with access to the raw and processed statistical data and also allows for users to access the service provided by the service provider. A serial interface 26 is also provided for management and allows a manager to access not only the raw and processed statistical data but also the configuration data.

A real time clock 20 is provided for timing the recordal of events to form the statistical data for processing by the central processing unit 21. A dynamic random access memory 22 is also provided to act as the working memory.

Flash memory is provided for storing the programs for carrying out the configuration of the router, for carrying out the statistical processing, for routing the communications and for providing the user interface. Also the configuration data is stored in the flash memory 23. This can comprise the initial factory configuration data and one or more sets of subsequently downloaded configuration data. Also, the serial number is stored in the flash memory 23. A battery-backed static RAM 24 is also provided for storing the statistical data such as the event log and the call log. An ISDN interface 29 is provided for interfacing to a basic rate ISDN (BRI) line and two plain old telephone service (POTS) interfaces 27a, 27b provide two analogue telephone lines (one for each of the two B channels of the BRI line) for use by telephones 28a and 28b.

Although the present invention has been described hereinabove with reference to specific embodiments, the present invention is not limited to such embodiments and variations will be apparent to a skilled person in the art. For example, although the interface to a computer system has been described with reference to a LAN interface, any interface can be used e.g. a serial interface such as an RS232 interface or a USB (universal serial bus). Further, more than one interface can be provided both to the computer system and to communication lines. The communication lines can be any form of network communication lines such as a permanent leased line, an ISDN line, or a simple analogue line. Also, different services may be available for users on different communication lines provided for by different communication data for those lines.

## Claims

1. Apparatus for interfacing a computer system (100) to a communication line to access a service, the apparatus comprising:
first I/O means (25) for connection to said computer system (100);
second I/O means (29) for connection to said communication line;
processing means (21) for gathering information on the use made of said service by said computer system (100), for processing said information to generate processed information, and for controlling said second I/O means (29) to transmit said processed information to a remote management system (500); and
storage means (22) for storing said information and/or said processed information.

2. Apparatus according to claim 1, including clock means (20), said processing means (21) being responsive to said clock means (20) to gather said information with respect to time, to process said information periodically, and to cause said second I/O means (29) to transmit said processed information periodically to said remote management system (500).

3. Apparatus according to claim 1 or claim 2, including user interface means to allow a user of said apparatus access to said information and/or said processed information in said storage means (22).

4. Apparatus according to claim 3, wherein said user interface means comprises a further I/O means (26).

5. Apparatus according to claim 3, wherein said user interface means comprises a computer program running on said processing means (21) to allow a user of said computer system access to said information and/or said processed information via said first I/O means (25).

6. Apparatus according to claim 5, wherein said user interface means comprises said processor means (21) operating as a Web server.

7. Apparatus according to claim 6, wherein said processing means (21) is operable to gather and process said information for output to said user using machine independent instructions.

8. Apparatus according to any one of claims 1 to 6, wherein said second I/O means (29) is adapted to receive configuration data from said management system (500), and said processing means (21) is operative to process said information in accordance with said configuration data.

9. Apparatus for communicating with a remote system (500) over a network (300) to access a service, the apparatus comprising:
I/O means (29) for connection to the network (300);
processing means (21) for gathering information on the use made of said service by said apparatus, and for processing said information to generate processed information; and
storage means (22) for storing said information and/or said processed information;
**characterized in that** said processing means (21) is adapted to control said I/O means (29) to transmit said processed information to a remote management system (500).

10. Apparatus according to claim 9, including clock means (20), said processing means (21) being responsive to said clock means (20) to gather said information with respect to time, to process said information periodically, and to cause said I/O means (29) to transmit said processed information periodically to said remote management system (500).

11. Apparatus according to claim 9 or claim 10, including user interface means to allow a user of said apparatus access to said information and/or said processed information in said storage means (22).

12. Apparatus according to claim 11, wherein said user interface means comprises a computer program running on said processing means (21) to allow a user access to said information and/or said processed information.

13. Apparatus according to claim 12, wherein said processing means (21) is operable to gather and process said information for output to said user using machine independent instructions.

14. Apparatus according to any one of claims 9 to 13, wherein said I/O means (29) is adapted to receive configuration data from said management system (500), and said processing means (21) is operative to process said information in accordance with said configuration data.

15. A method of monitoring communications between a communication apparatus (200) and a remote system (500) over a network (300) to access a service, the method comprising the steps at said communication apparatus (200), of:
gathering information on the use of said service by said communication apparatus (200); and
processing said information to generate processed information;
**characterized by** transmitting said processed information to a remote management system (500).

16. A method according to claim 15, wherein said information is gathered with respect to time, processed periodically, and periodically transmitted to said remote management system (500).

17. A method according to claim 15 or claim 16, including the step of supplying said information and/or said processed information to a user.
